# EUROPÄISCHE PATENTSCHRIFT

(11) **EP 1 818 118 B1**
(45) Veröffentlichungstag und Bekanntmachung des Hinweises auf die Patenterteilung: **18.10.2017**
(21) Anmeldenummer: 07007708.6
(22) Anmeldetag: 13.02.2004
(51) Int. Cl.: B21J 9/02, B21K 21/14, F16F 1/38

(54) **Werkzeug zum Umformen eines Endbereichs einer starren Hülse und elastische Gelenke**
Tool for reforming the end area of a rigid casing and elastic joints
Outil de déformage d'une zone terminale d'une douille fixe et articulation élastique

(43) Veröffentlichungstag der Anmeldung: 15.08.2007
(62) Teilanmeldung aus: 04290404.5
(73) Patentinhaber: Anvis SD France SAS, 58300 Decize Cedex (FR)
(72) Erfinder: Ducloux, Antoine, 63670 La Roche Blanche (FR); Dupuis, Frédéric, 58000 Never (FR); Skiera, Jean-François, 58340 Cercy-La-Tour (FR); Charnotet, Thierry, 58300 St. Leger des Vignes (FR)
(74) Vertreter: Schmid, Nils T.F.

(56) Entgegenhaltungen:
- EP-A- 0 250 272
- EP-A- 1 219 853
- EP-A- 1 386 677
- EP-B- 0 524 844
- WO-A-02/070170
- US-A- 5 806 166
- US-A- 5 814 421
- US-B1- 6 370 776

## Beschreibung

Die Erfindung betrifft eine Vorrichtung zum Umformen eines Endbereichs einer starren Hülse eines elastischen Gelenks, wobei ein Formwerkzeug zum Aufbringen einer Umformkraft an dem Endbereich angesetzt und um eine gegenüber einer Axialrichtung der Hülse geneigte Rotationsachse auf dem Endbereich abrollend gedreht wird derart, daß der Endbereich in Radialrichtung der Hülse verformt wird.

Ein gattungsgemäßes Umformverfahren ist aus dem EP 0 524 844 B1 bekannt. Bei dem bewährten Umformverfahren, das auch unter der Bezeichnung "Bouterollage-Technik" bekannt ist, kann das Montageende einer Innenhülse auch dann verbreitend verformt werden, wenn bereits eine elastomere Zwischenschicht auf der Innenhülse anvulkanisiert ist. Mit der bekannten Umformtechnik ist es möglich, das Hülsenende lokal begrenzt umzuformen, ohne den gesamten Hülsenkörper zu stark stauchend zu belasten. Das für den Umformvorgang verwendete Formwerkzeug, eine Art Nietkopfwerkzeug, rollt an dessen konischer Formfläche, geneigt zur Axialrichtung der Hülse, auf dem Endbereich der Hülse ab, um einen ringförmigen Wulst am Endbereich zu schaffen, der sich radial nach außen erstreckt.

Weiterhin ist aus dem EP 0 524 844 B1 bekannt, den durch den Umrollverformschritt verformten Endbereich mit einem radial nach innen gerichteten Vorsprung zusätzlich zu versehen, indem die Hülse vollumfänglich gestaucht wird. Dabei wird die gesamte Hülse durch Stauchkräfte belastet, so daß eine Längenreduzierung kaum vorhersehbar ist und das Material der Hülse in ihrer gesamten Länge in Mitleidenschaft gezogen wird.

Es ist Aufgabe der Erfindung, ein kostengünstiges und einfaches Umformen eines Endbereichs einer starren Hülse eines elastischen Gelenks zu erzeugen, wobei der Endbereich der Hülse zur Bildung von radial nach innen und/oder außen ragenden Überdikkungen oder Wülsten ohne Stauchung der gesamten Hülse so materialschonend wie möglich umgeformt werden soll, wobei schnelle Fertigungszyklen mit dem Verfahren möglich sein sollen.

Diese Aufgabe wird durch ein Verfahren zum Umformen eines Endbereichs der starren Hülse mittels eines abrollenden Formkopfes gelöst, dessen Rotationsachse zur Axialrichtung der starren Hülse geneigt ist und von dem zumindest ein nicht vernachlässigbarer Teil der Umformkraft in den Endbereich mit zumindest einer radial nach innen weisenden Richtungskomponenten eingeleitet wird. Mit der erfindungsgemäßen Maßnahme ist ein Stauchen der Hülse zum Ausbilden eines radial nach innen, insbesondere über eine Nenndicke der Hülse hinausragenden Vorsprungs, beispielsweise als Verliersicherung für die Hülse, eines elastischen Gelenks nicht mehr notwendig. Die Hülse wird nur noch einer geringen axialen Verformungskraft ausgesetzt, wodurch die Hülse in Gesamtbetrachtung materialschonend bearbeitet werden kann. Außerdem gewährleistet die erfinderische Maßnahme, daß sowohl eine radiale Aufweitung als auch eine radiale Verengung des Endbereichs während eines einzigen Umformschritts realisierbar ist. Auf diese Weise kann ein ökonomisches und schnelles Fertigungsverfahren für Hülsen von elastischen Gelenken realisiert werden.

Mit der erfindungsgemäßen Maßnahme kann der Endbereich der Hülse verengt werden, um eine präzise Positionierung der Hülse um ein Klemmbauteil, wie eine Schraube, herum zu realisieren. Dabei ist der Durchmesser der Schraube zumindest ein wenig geringer als der Durchmesser der Hülse an deren verengt verformten Endabschnitt.

Insbesondere wird mit der Vergrößerung oder Verstärkung des Endbereichs der Hülse eine Erweiterung oder Vergrößerung der Montagefläche der Hülse, also des elastischen Gelenks, mit einem Teil des Kraftfahrzeugchassis erreicht, wodurch auf diese Weise der Montage-Kontaktdruck zwischen der Montagefläche und dem Kraftfahrzeug reduziert wird. Dies ermöglicht eine robuste Befestigung des elastischen Gelenks, insbesondere weil es damit möglich wird, wesentlich höhere Montagekräfte an der Montagefläche der Hülse angreifen zu lassen, ohne dem Risiko zu unterlaufen, daß zugeordnete Teile des Kraftfahrzeugchassis verformt werden. Mit der erfindungsgemäßen Maßnahme wird der nicht vernachlässigbare Teil der Umformkraft derart eingeleitet, daß sich der Endbereich zumindest teilweise nach radial innen verformt. Vorzugsweise ist die Umformkraft gleichzeitig auch radial nach außen in den Endbereich eingeleitet, so daß eine radiale Aufweitung des Endbereichs realisiert wird. Dabei soll sichergestellt werden, daß der Endbereich über dessen radiale Abmessung, nämlich die radiale Nenndicke der Hülse, im unverformten Zustand hinaus radial nach innen und/oder nach außen verformt wird.

Eine Weiterbildung der erfindungsgemäßen Maßnahme betrifft das Bestimmen eines Verformungsverhältnisses während eines Umformschritts radial nach außen und radial nach innen. Vorzugsweise ist ein Verformungsverhältnis für gewünschte Verformungen des Endbereichs einstellbar. Durch die punktuelle oder linienartige Umformung und die Regelbarkeit der Umformkraft kann eine exakte Verformung der Hülse mit sehr genauen Abmessungen realisiert werden. Das Verfahren kann derart eingestellt werden, daß eine Verformung des Endbereichs radial nach außen unterbleibt und die gesamte Umformkraft derart in den Endbereich eingeleitet wird, daß sich letzterer ausschließlich radial nach innen verformt. Es können andere Verformungsverhältnisse eingestellt werden, bei denen die radial äußere Umformung gegenüber der radial inneren Umformung überwiegt, oder umgekehrt.

Bei einer besonderen Weiterbildung der erfindungsgemäßen Maßnahme kann die Verformung des Endbereich radial nach innen sowie auch radial nach außen mittels einer Matrize eingeschränkt werden. Es hat sich allerdings herausgestellt, daß auch für besonders genau einzuhaltende Toleranzmaße des elastischen Gelenks eine Matrizenanordnung nicht erforderlich ist. Außen- und/oder Innenmatrizen können insbesondere dann eingesetzt werden, wenn bestimmte Außen- und/oder Innenformen des Endbereichs gewünscht sind.

Bei einer bevorzugten Weiterbildung der erfindungsgemäßen Maßnahme wird die Verformung des Endbereichs radial nach außen zumindest begrenzt und vorzugsweise vollständig verhindert, so daß das erfindungsgemäße Verfahren ein Aufweiten des Endbereichs über dessen unverformten Zustand ausgeschlossen ist.

Bei einer bevorzugten Ausführung der erfindungsgemäßen Maßnahme wird die dem Formwerkzeug zuzuwendende Montagefläche des Endbereichs beim abrollenden Umformen durch das Formwerkzeug aufgespreizt oder aufgespaltet. Vorzugsweise kann eine vorbestimmbare, radial nach außen und/oder radial nach innen weisende Spreizrichtungskomponente hervorgerufen werden. Die Größe einer Spreizrichtungskomponenten kann abhängig von dem gewünschten Verformungsmaß eingestellt werden. Dabei kann für eine stärkere Verformung nach radial außen eine größere Spreizrichtungskomponente in radialer Richtung nach außen und bei einer stärkeren Einengung des Endbereichs der Hülse eine größere Spreizrichtungskomponente nach radial innen vorgesehen sein. Somit betrifft die Erfindung ein gemäß den Merkmalen von Patentanspruch 1 ausgebildetes Werkzeug zum Umformen eines Endbereichs einer starren Hülse. Danach ist das Werkzeug, das an dem Endbereich abrollend eine Umformkraft lokal begrenzt einleiten kann, mit einer Einrichtung zum gerichteten Einleiten der Umformkraft in den Endbereich mit zumindest einer nicht vernachlässigbaren, hin zur Rotationsachse weisenden Richtungskomponenten versehen. Vorzugsweise ist die Einrichtung an der Formfläche angeordnet, die insbesondere im wesentlichen konisch oder im wesentlichen kegelstumpfförmig ausgeführt ist. Die konische Fläche bildet mit einer zur Axialrichtung des Formkopfes senkrechten Radialrichtung einen nicht vernachlässigbaren Winkel, der insbesondere einer Neigung der Rotationsachse gegenüber der Längsachse der Hülse beim Umformvorgang entspricht.

Erfindungsgemäß weist die Einrichtung einen sich von der Formfläche erstreckenden keilförmigen Vorsprung auf, wobei die Keilform derart spitz zuläuft, dass ein Penetrieren der Einrichtung in den Endbereich der Hülse schon mit geringer Umformkraft möglich ist. Durch Wahl des Neigungswinkels der keilförmigen Einrichtung kann das Maß der gewünschten Aufweitung oder Verengung des Endbereichs eingestellt oder bestimmt werden.

Erfindungsgemäß umfasst die Einrichtung zusätzlich eine Umgreifstruktur, die dazu ausgelegt ist, die Außenseite des Endbereichs der Hülse zu umgreifen. Auf diese Weise kann die Umformkraft zu einem grossen Teil auf einfache und das Material des Endbereichs der Hülse schonende Weise in eine radial nach innen weisende Richtung umgelenkt werden. Vorzugsweise ist die Umgreifstruktur mit einer Innenabmessung versehen, die im wesentlichen einer äusseren Abmessung eines Endbereichs der Hülse entspricht, vorzugsweise mit einem geringen Übermass zur Aussenabmessung des Endbereichs in dessen unverformten Zustand ausgebildet ist.

Bei einer Weiterbildung der Erfindung kann die Einrichtung dazu ausgelegt sein, die Umformkraft in den Endbereich sowohl mit einer nicht vernachlässigbaren, hin zu der Rotationsachse als auch von der Rotationsachse weg weisenden Richtungskomponente gerichtet einzuleiten. Auf diese Weise ist es möglich, mit ein und demselben Werkzeug eine Aufweitung und eine Verengung des Endbereichs der Hülse mittels eines einzigen Umformschritts zu realisieren.

Vorzugsweise ist die Einrichtung als Aufspreiz- oder Aufspaltstruktur ausgeführt. Dabei kann ein Spreizwinkel zum Einstellen der gewünschten Richtungskomponenten der Umformkraft wählbar sein. Überraschenderweise stellte sich bei dem Einsatz einer Aufspreiz- und Aufspaltstruktur heraus, daß der aufgespreizte oder aufgespaltete Endbereich der Hülse eine Aufweitung und Einengung der radialen Abmessung des Endbereichs bewirkt, ohne daß die Stabilität und Festigkeit der Hülse bei deren Abstützen an beispielsweise einem Kraftfahrzeug-Chassisteil beeinträchtigt ist. Insbesondere die am aufgespreizten oder aufgespalteten Endbereich auftretenden Kerbspannungen sind trotz hoher Montagekräfte nicht die die Lebensdauer der Hülse des elastischen Gelenks bestimmenden Größen. Vielmehr ist durch das Erzeugen eines radial innen liegenden und radial außen liegenden aufgespreizten Abstützarms eine verbesserte Elastizität des Gelenks dahingehend gegeben, daß die aufgespreizten Abstützarme je nach Abstützbelastung gemäß einer scharnierartigen Bewegung gegenüber dem Hülsenkörper nachgeben können und damit Spitzenbelastungen insbesondere an dem an der Hülse angebrachten Elstomerkörper vermeiden.

Bei einer bevorzugten Ausführung der Erfindung sind die Einrichtung und der Formkörper aus einem Stück gefertigt.

Bei einer Weiterbildung der Erfindung erstreckt sich die Einrichtung zumindest teilweise konzentrisch um die Rotationsachse. Vorzugsweise ist die Einrichtung im wesentlichen kreisförmig an der Formfläche ausgebildet. Dabei kann durch Auswahl des Durchmessers der konzentrischen Einrichtung der Grad der Umformung radial nach innen und/oder radial nach außen eingestellt werden.

Bei einer Weiterbildung ist das erfindungsgemäße Werkzeug mit wenigstens einem Umformbegrenzer versehen, welcher die Umformung des Endbereichs radial nach innen und/oder radial nach außen begrenzen kann. Bei einer Weiterbildung der Erfindung ist der Umformbegrenzer durch ein konzentrisch um die Rotationsachse des Formkopfs liegendes, sich von der Formfläche erstreckendes vollförmiges Ansatzstück ausgebildet. Das Ansatzstück umfaßt eine leicht konische Außenform, die in die unverformte Innenhülse paßbar ist. Der Umformbegrenzer zum Begrenzen der Umformung in radialer Richtung nach außen kann vorzugsweise durch die Umgreifstruktur gebildet sein. Um eine radial nach außen gerichtete kleine Stufe am Endbereich der Hülse zu formen, kann die Umgreifstruktur ein entsprechendes Übermaß gegenüber dem unverfomten Hülsenendbereich aufweisen. Durch die Erfindung kann ein elastisches Gelenk mit einer Längsachse, das eine radial innen liegende und/oder eine radial außen liegende Hülse aufweist hergestellt werden. Ein Elastomerkörper ist mit der radial innen liegenden und/oder der radial außen liegenden Hülse verbunden. Die Hülse weist einen Endbereich mit einer Abstützfläche auf, wobei der Endbereich mit einer radialen Überdicke ausgebildet ist. An der Abstützfläche ist wenigstens eine Einkerbung oder Furche derart eingebracht, daß der überdicke Endbereich im wesentlichen um das radiale Maß der Einkerbung über eine Nenndicke der Hülse hinaus radial aufgeweitet ist. Die Aufweitung durch die Einkerbung bewirkt eine größere radiale Abmessung des Endbereichs und damit einen größeren Abstützbereich für das elastische Gelenk. Materialbelastende Stauchverfahren zum kaltumformenden Vergrößern des Endbereichs können damit entbehrt werden. Die Einkerbung bewirkt ein Aufspalten des Endbereichs in einen radial innen liegenden und einen radial außen liegenden Abstützbereich, der durch die Einkerbung getrennt ist. Aufgrund dieser getrennten Abstützbereiche kann ein sicheres Abstützen der Hülse an unebenen Flächen, beispielsweise eines Kraftfahrzeug-Chassiteils, insofern ausgeglichen werden, als die durch die Einkerbung gebildeten Abstützschenkel unabhängig voneinander elastisch verformt werden können. Unter Nenndicke oder nominaler Dicke der Hülse sei die Dicke der Hülse verstanden, welche die Hülse im wesentlichen im unverformten Zustand, insbesondere im wesentlichen am dem dem Endbereich benachbarten, unverformten Körperabschnitt der Hülse aufweist. Vorzugsweise ist die Nenndikke der Hülse im Verlauf der gesamten Längsachse der Hülse außer dem ungeformten Endbereich konstant.

Insbesondere kann einer der Abstützschenkel, insbesondere der radial nach außen durch das Einbringen der Einkerbung gebildete Abstützschenkel, zum Abstützen an einem Kraftfahrzeugchassisteil genutzt werden, wobei die Stirn- oder Abstützfläche des Abstützschenkels mit dem Fahrzeugchassis kraftschlüssig verbunden werden kann. Der radial innen liegende durch die Einkerbung gebildete Abstützschenkel kann zur Anlage eines Klemmbauteils, wie einer Klemmschraube, genutzt werden, wodurch durch die Verengung der Hülse aufgrund des radial innen liegenden Abstützschenkels eine präzise Positionierung der Schraube ermöglicht ist. Dabei ist der Außendurchmesser der Schraube zumindest geringfügig kleiner auszubilden als der kleinste Durchmesser des radial innen liegenden Abstützschenkels. Die Ausbildung zweier Abstützschenkel verleiht dem elastischen Gelenk eine Flexibilität dahingehend, daß auch unebene Flächen an dem Chassisteil zur Montage genutzt werden können. Bevorzugt erstreckt sich insbesondere bei einem rotationsförmigen elastischen Gelenk die Einkerbung zumindest kreisabschnittsweise konzentrisch zur Längsachse der Hülse. Vorzugsweise erstreckt sich die Einkerbung an der Abstützfläche im wesentlichen entlang einer Kreislinie um die Längsachse der Hülse.

Infolge der Erfindung ist die Einkerbung im Querschnitt V-förmig. Auf diese Weise wird erreicht, daß die Überdicke des Endbereichs von dessen Abstützfläche entlang der Längsachse der Hülse allmählich abnimmt, bis der Endbereich in den Hülsenkörper mit Nenndicke übergeht. Vorzugsweise ist ein Öffnungswinkel der V-förmigen Einkerbung zwischen ca. 15° bis 120°, vorzugsweise zwischen ca. 30° und 90°.

Um den wulstartigen Endbereich auf unterschiedliche Weise radial nach innen und radial nach außen erstrecken zu lassen, kann die V-förmige Einkerbung unterschiedliche V-Schenkel-Winkel aufweisen, wobei ein kleiner V-Schenkel-Winkel eine kleine Aufweitung des Endbereichs in der entsprechenden Radialrichtung bewirkt. Entsprechend ist ein großer V-Schenkel-Winkel für eine starke Aufweitung des Endbereichs in der zugeordneten Radialrichtung verantwortlich.

Um die gewünschte Überdicke und eine radial aufgeweitete große Abstützfläche zu erreichen, ist die Einkerbung oder Furche je nach Dimensionierung der Hülse zwischen ca. 0,5 mm und 3 mm tief.

Sollte der Endbereich sich gleichmäßig nach radial innen und nach radial außen erstrecken, ist die Einkerbung im wesentlichen auf Höhe des Mediandurchmessers einer rotationsförmigen Hülse anzuordenen. Über einen Versatz der Einkerbung zum Mediandurchmesser der rotationsförmigen Hülse kann eine gewünschte stärkere Aufweitung des Endbereichs in der entsprechenden Radialrichtung vorgenommen werden.

Schließlich kann durch die Erfindung ein elastisches Gelenk mit einer Längsachse, das eine radial innen liegende und/oder eine radial außen liegende Hülse aufweist hergestellt werden. Ein Elastomerkörper ist an wenigstens einer der Hülsen anvulkanisiert. Diese Hülse hat einen Endbereich, der eine radial nach innen ragende Überdickung aufweist, an der eine große Abstützfläche gebildet Vorteilhafterweise ist die Außenseite des gegenüber einer Nenndicke der Hülse überdicken Endbereichs, eines Übergangsbereichs von dem Endbereich zum Hülsenkörper und zumindest eines dem Übergangsbereich benachbarten Abschnitts des Hülsenkörpers im wesentlichen in einer zur Längsachse konzentrischen Ebene liegend geformt. Ein derartig elastisches Gelenk zeichnet sich durch eine einfache Montierbarkeit auf, als radiale Vorsprünge nach außen das Einbringen des Hülsenkörpers in Aufnahmen nicht behindert. Bei einer radial innen liegenden Hülse, bei der der überdicke Endbereich eine Verliersicherung des elastischen Gelenks darstellen kann, gewährleistet der Endbereich ohne radial nach außen vorstehende Überdickung, daß der außenliegende Elastomerkörper nicht durch Quetschung in dessen Dämpfungsfunktion beeinflußt ist. Bevorzugt ist die gesamte Außenseite der Hülse im wesentlichen eben und stufenfrei.

Weitere Vorteile, Merkmale und Eigenschaften der Erfindung werden durch die folgende Beschreibung bevorzugter Ausführungen anhand der beiliegenden Zeichnungen deutlich, in denen zeigen:
- Figur 1: eine Querschnittsansicht zweier Werkzeug-Hülsen-Anordnungen mit dem erfindungsgemäßen Werkzeug, wobei ein erster Aspekt der Einrichtung zum gerichteten Einleiten der Umformkraft dargestellt wird, wobei eine erste Ausführung mit der zeichnerisch linken Hälfte der Anordnung und eine zweite Ausführung mit der zeichnerisch rechten Hälfte der Anordnung dargestellt sein sollen.
- Figur 2: eine Querschnittsansicht eines Endbereichs einer gemäß der Ausführung der linken Anordnung nach Figur 1 umgeformten Hülse;
- Figur 3: eine Querschnittsansicht einer Werkzeug-Hülsen-Anordnung mit dem erfindungsgemäßen Werkzeug, wobei ein zweiter Aspekt der Einrichtung zum gerichteten Einleiten der Umformkraft dargestellt wird;
- Figur 4: eine Draufsicht auf eine Formseite eines erfindungsgemäßen Formwerkzeugs mit dem ersten Aspekt der Einrichtung zum gerichteten Einleiten der Umformkraft;
- Figur 5: eine Draufsicht auf eine Formseite eines erfindungsgemäßen Formwerkzeugs mit dem zweiten Aspekt der Einrichtung zum gerichteten Einleiten der Umformkraft.

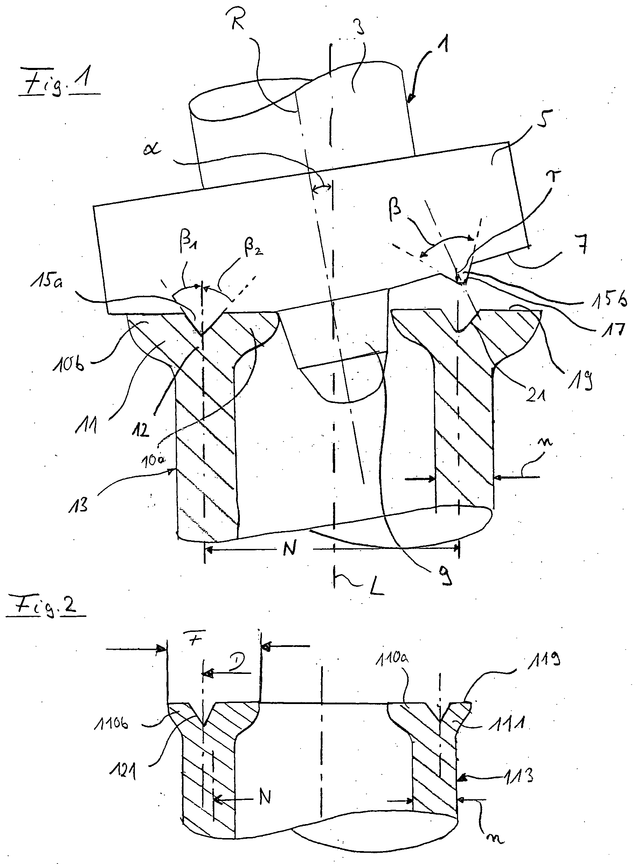

In Figur 1 ist ein Verfahren angedeutet, wobei zwei verschiedene Werkzeug-Hülsen-Anordnungen gemäß dem ersten Aspekt der Einrichtung zum gerichteten Einleiten der Umformkraft dargestellt sind. Im Grundsatz ist ein einteiliger Formkopf 1 mit einer Antriebswelle 3, einem Formkörper 5 und einer Formfläche 7 dargestellt. An der Formfläche 7 erstreckt sich ein konisches Ansatzstück 9, das an seinem Ende abgerundet ist.

Über die Formfläche 7 wird eine Umformkraft lokal begrenzt an einem linienartigen Kontaktbereich (nicht sichtbar) in einen Endbereich 11 einer Innenhülse 13 eines nicht näher dargestellten elastischen Gelenks eingeleitet. Die Hülse 13 umfaßt einen Hülsenkörper 14 mit einer Nenndicke n.

Die Formfläche 7 ist konisch zur Rotationsachse R des Formwerkzeugs 1 ausgebildet. Die Rotationsachse R ist zur Längsachse L der Hülse 13 in einem Winkel α geneigt. Bei dem Umformvorgang führt der Formkopf 1 eine Drehbewegung zum einem um seine eigene Rotationsachse R und zum anderen um die Längsachse L der Hülse 13, wobei die Rotationsachse R eine konische Bewegungsbahn bezüglich der Längsachse L beschreibt. Die Bewegungsabläufe des Formkopfs 1 werden detailliert in dem europäischen Patent EP 0 524 844 B1 beschrieben. Für den Umformschritt des Endbereichs 11 der Hülse 13 ist allerdings insbesondere aufgrund der Regelbarkeit der Andrückkraft des Formkopfes 1 gegen die Hülse 13 eine Außenmatrize zum Begrenzen der radialen Verformung des Endbereichs 11 nach außen nicht notwendig. Sollte eine bestimmte Außenform des Endbereichs 11 gewünscht sein, kann durchaus eine Außenmatrize vorgesehen sein.

Der Formkopf 1 umfaßt an der Formfläche 7 einen sich konzentrisch um die Rotationsachse R erstreckenden keilförmigen Vorsprung 15, der auf Höhe eines Durchmessers um die Rotationsachse R angeordnet ist, mit dem beim Abrollen an der Fläche 19 der Hülse 13 im wesentlichen der Mittel- oder Mediandurchmesser N der Hülse 13 zusammenfällt. Der V-Vorsprung 15 hat einen Öffnungswinkel β, der ca. 60° beträgt. Bei der Ausführung des Formkopfes gemäß Figur 1 sind die V-Schenkel-Winkel β₁ und β₂ zu einer Normalen T der Formfläche 7 im wesentlichen gleich groß.

Bei der ersten Ausführung des Formkopfes, welche auf der linken Hälfte der Figur 1 dargestellt ist, ist der keilförmige Vorsprung 15a mit einem spitz zulaufenden Ende ausgebildet, um das Penetrieren des Vorsprungs in die Hülse 13 zu erleichtern. Bei der zweiten, auf der rechten Hälfte der Fig. 1 dargestellten Ausführung des Formkopfes 1 ist der keilförmige Vorsprung 15b zu dessen freien Ende hin abgerundet, wobei die runde Spitze 17 mit einem festgelegten Radius r versehen sein kann. Für verschiedene Formköpfe können unterschiedliche Radien je nach gewünschter Form des zu verformenden Endbereichs der Hülse ausgewählt werden.

Ein derart geformter und positionierter Vorsprung 15 bewirkt bei dessen Ansetzen und abrollenden Eindrücken in die Abstützfläche 19 des Endbereichs 11 ein gleichmäßiges radiales Aufweiten des Endbereichs 11 nach innen sowie nach außen. Durch das Eindrücken des Vorsprungs 15 wird das Hülsenmaterial an der Abstützfläche 19 plastisch verformt, so daß eine den gesamten Endbereich beeinflussende Einkerbung 21 an der Abstützfläche 19 eingebracht ist. Durch die Einkerbung 21 wird der Endbereich in zwei sich von einer gemeinsamen Basis 12 radial voneinander weg erstreckende Abstützarme 10a und 10b aufgespalten. Der in Figur 1 dargestellte aufgeweitete Endbereich 11 weist eine zur deutlichen Darstellung etwas zu groß gezeichnete Aufweitung oder Überdickung auf. Es soll klar sein, daß sich das Maß der Aufweitung des Endbereichs 11 im wesentlichen aufgrund des durch den Vorsprung 15 beim Eindrücken in den Endbereich 11 verdrängten Volumens plus der durch die Formkraft erzeugten lokalen Stauchung oder Quetschung des Hülsenmaterials an der Formfläche 7 ergibt.

Die zweite Ausführung des Formkopfes mit einem keilförmigen Vorsprung 15b mit abgerundeter Spitze 17 ruft Einkerbungen an dem Endbereich 11 der Hülse 13 hervor, bei denen Spannungsspitzen an der Einkerbungssenke vermieden werden, weil keine kantenförmigen Einkerbungen an der Einkerbung hervorgerufen werden. Außerdem verhindert das Abrunden des keilförmigen Vorsprungs 15b, daß der keilförmige Vorsprung 15b zu tief in das Material der Hülse 13 eindringen kann, so daß die Verformung des Endbereichs 11 in Radialrichtung konzentriert und in Axialrichtung möglichst eingeschränkt ist.

Das Ansatzstück 9 bildet einen Anschlag oder Umformbegrenzer dahingehend, daß eine radiale Aufweitung nach innen auf die radiale Abmessung des Fußes des Ansatzes 9 an der Formfläche 7 begrenzt ist.

Das in Figur 1 gezeigte besondere Bouterollage-Verfahren ermöglicht mit einem einzigen Umformschritt ein Vergrößern der Abstützfläche 19 am Endbereich 11 in entgegengesetzte radiale Richtungen, nach außen sowie nach innen.

Figur 2 zeigt einen Hülsenkörperabschnitt mit Endbereich 111, der gemäß dem Umformverfahren mittels der linken Formkopf-Hülsen-Anordnung nach Figur 1 gefertigt ist. Da zur besseren Lesbarkeit der Figurenbeschreibung für identische und ähnliche Bauteile der Hülse 113 identische Bezugszeichen verwendet werden, die um 100 erhöht sind, bedarf es insbesondere keine erneute Beschreibung für diese Bauteile und deren Funktion.

Der Endbereich 111 unterscheidet sich von dem in Figur 1 gezeigten Endbereich 11 der Hülse 13 gemäß Figur 1 darin, daß er stärker nach radial innen als nach radial außen aufgeweitet ist, also der radial außen liegende Abstützarm 110b weniger prägnant ausgebildet ist als der radial innen liegende Abstützarm 110a. Dies wird dadurch erreicht, daß die Einkerbung 121 an der Abstützfläche 119 mit einem größeren Durchmesser D als der Mediandurchmesser N der Hülse 113 eingebracht wurde. Da sich die Abmessung der Einkerbung 121 von der der 21 nicht unterscheidet, ist die radiale Ausdehnung F der Abstützfläche 119 der ungeformten Endbereiche 11, 111 im wesentlichen gleich groß.

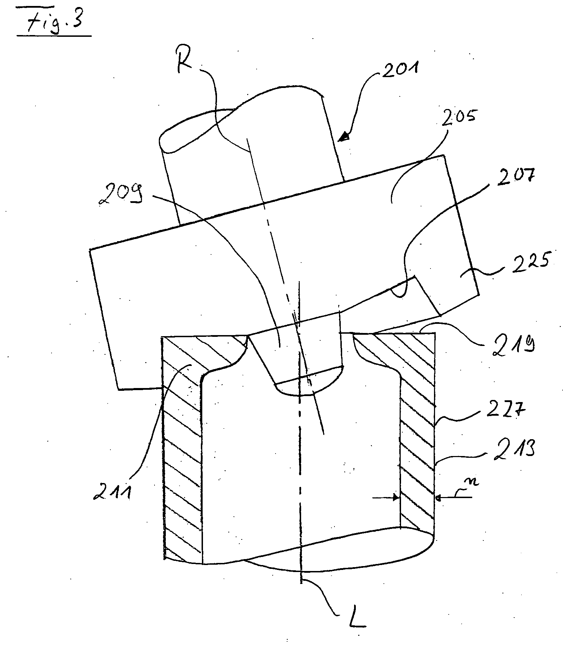

Gemäß Figur 3 wir die Durchführung des Verfahrens mittels einer gegenüber Figur 1 anderen Ausführung des Formkopfes dargestellt, in der die Einrichtung zum gerichteten Einleiten der Umformkraft gemäß ihrem zweiten Aspekt dargestellt wird. Da zur besseren Lesbarkeit der Figurenbeschreibung für identische und ähnliche Bauteile der Formkkopf-Hülsen-Anordnung identische Bezugszeichen verwendet werden, die um 200 erhöht sind, bedarf es insbesondere für diese Bauteile und deren Funktion keiner erneuten Erläuterung.

Der Formkopf 201 umfaßt radial außen liegend an seiner Formfläche 207 eine einstückig mit dem Formkörper 205 ausgebildete, sich im wesentlichen axial erstreckende Umgreifstruktur 225. Die Innenabmessung der Umgreifstruktur 225 entspricht im wesentlichen der Außenabmessung der Hülse 213 im unverformten Zustand. Beim abrollenden Umformvorgang bewirkt die Umgreifstruktur 225, daß sich der Endbereich 211 der Hülse 213 nicht in radialer Richtung nach außen verformen kann, sondern leitet die Umformkraft ausschließlich in nach innen gerichtete radiale Kraftkomponenten um. Auf diese Weise wird ein im wesentlichen L-förmiger Endbereich 211 erzeugt, der eine radial nach innen weisende Einengung aufweist, mit der eine große Abstützfläche 219 und eine Verliersicherung erzeugt ist. Das Ansatzstück 209 des Fromkopfes 201 verhindert ein Verformen des Endbereichs über ein gewünschtes Maß nach radial innen. Somit wird eine Hülse 213 mit einem radial nach innen ragenden Kragen gebildet, wobei die Außenseite 227 der Hülse 213 sich in Längsrichtung kontinuierlich in einer zylindrischen Ebene liegend erstreckt.

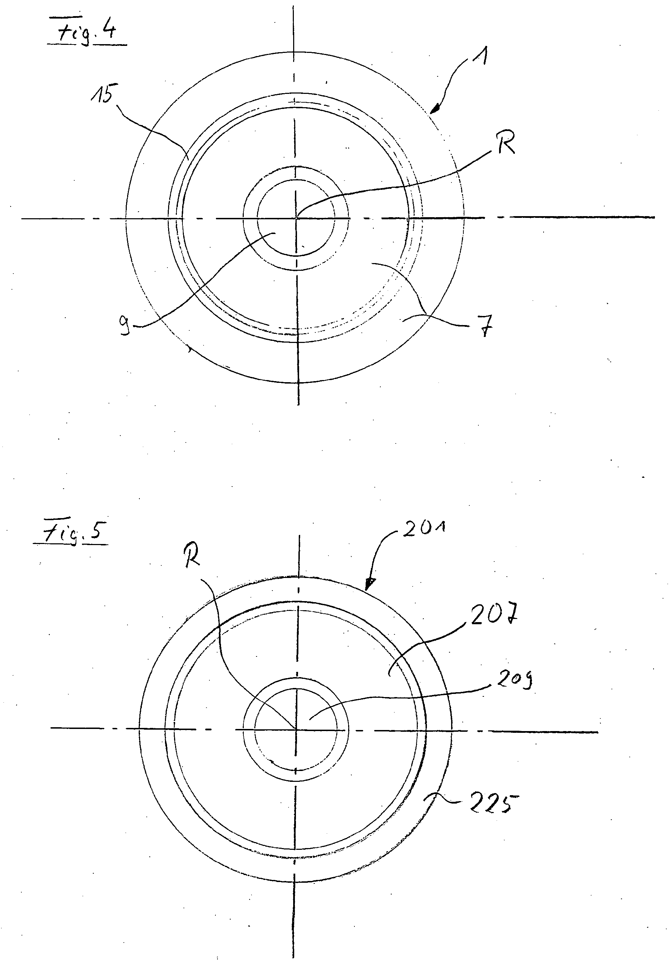

Gemäß Figur 4 ist in einer Draufsicht die Formfläche 7 des Formkopfes 1 dargestellt, der bei dem Umformverfahren nach Figur 1 verwendet wird. Aus Figur 4 ist die rotationsförmige Ausgestaltung des Formkopfes 1 zur Rotationsachse R ersichtlich, wobei sich das Ansatzstück 9 sowie der keilförmige Vorsprung 15 konzentrisch um die Rotationsachse R erstrekken.

Gemäß Figur 5 ist in einer Draufsicht die Formfläche 207 des Formkopfes 201 dargestellt, der gemäß dem Umformverfahren nach Figur 3 verwendet wird. Aus Figur 5 ist die rotationsförmige Ausgestaltung des Formkopfes 201 ersichtlich, wobei der Ansatz 209 sowie die Umgreifstruktur 225 konzentrisch um die Rotationsachse R ausgebildet sind.

Die Gestaltungen der Formfläche 7, 207, wie in den Figuren 4 und 5 dargestellt ist, verdeutlicht das Funktionsprinzip des Umformverfahrens dahingehend, daß die im wesentlichen ebene Formfläche 7, 207 mit dem keilförmigen Vorsprung 15 bzw. der Umgreifstruktur 225 derart zusammenwirkt, daß zum einen der Hülsenkörper konzentriert an einer lokal begrenzten Stelle umgeformt wird, allerdings verteilt entlang einer Krafteinleitlinie radial längs der Umformfläche 7, 207, und zum anderen der keilförmige Vorsprung 15 bzw. die Umgreifstruktur 225 die einzuleitende Umformkraft in die gewünschte Richtung leiten, in welche sich das Hülsenmaterial zur Bildung des gewünschten Endbereichs verformen soll.

### Bezugszeichenliste

- 1, 201: Formkopf
- 3: Antriebswelle
- 5,205: Formkörper
- 7,207: Formfläche
- 9, 209: Ansatzstück oder Ansatz
- 10a, 10b, 110a, 110b: Abstützarm
- 11, 111, 211: Endbereich
- 12: Basis
- 13,113,213: Hülse
- 14: Hülsenkörper
- 15, 15a, 15b: keilförmiger Vorsprung
- 17: gerundete Spitze
- 19, 119,219: Abstützfläche
- 21, 121: Kerbe oder Einkerbung
- 225: Umgreifstruktur
- 227: Außenseite der Hülse
- α: Winkel
- β: Öffnungswinkel
- β₁, β₂: V-Schenkel-Winkel
- D: Durchmesser
- L: Längsachse
- N: Mediandurchmesser
- R: Rotationsachse
- T: Normale
- n: Nenndicke
- r: Radius

## Patentansprüche

1. Rotationsförmiges Werkzeug zum Umformen eines Endbereichs (11, 111, 211) einer starren Hülse (13, 113, 213) eines elastischen Gelenks, umfassend:
- einen Formkörper mit einer Formfläche, über die dem Endbereich (11, 111,211) abrollend eine Umformkraft mitteilbar ist,
- eine Einrichtung zum gerichteten Einleiten der Umformkraft in den Endbereich (11, 111, 211) mit zumindest einer nicht vernachlässigbaren, radial nach innen bezüglich der Rotationsachse (R) des Werkzeugs weisenden Richtungskomponente, und
- einen Umformbegrenzer, der eine Umformung des Endbereichs (11, 111, 211) der Hülse (13, 113,213) radial nach innen begrenzt,
**dadurch gekennzeichnet, dass** die Einrichtung:
- eine Umgreifstruktur (225) zum Leiten der einzuleitenden Umformkraft in die gewünschte Richtung aufweist, die dazu ausgelegt ist, die Aussenseite des Endbereichs der Hülse zu umgreifen; und
- einen sich von der Formfläche erstreckenden keilförmigen oder V-förmigen Vorsprung (15, 15a, 15b) aufweist, zum Leiten der einzuleitenden Umformkraft in die gewünschte Richtung.

2. Werkzeug nach Anspruch 1, **dadurch gekennzeichnet, daß** die Einrichtung an der Formfläche angeordnet ist.

3. Werkzeug nach Anspruch 1 oder 2, **dadurch gekennzeichnet, daß** die Einrichtung dazu ausgelegt ist, die Umformkraft in den Endbereich mit zumindest einer nicht vernachlässigbaren, hin zur Rotationsachse (R) und von der Rotationsachse (R) wegweisenden Richtungskomponente gerichtet einzuleiten.

4. Werkzeug nach einem der Ansprüche 1 bis 3, **dadurch gekennzeichnet, daß** die Einrichtung als Aufspreiz- oder Aufspaltstruktur ausgeführt ist.

5. Werkzeug nach Anspruch 4, **dadurch gekennzeichnet, daß** ein Spreizwinkel zum Einstellen der Richtungskomponente der Umformkraft wählbar ist.

6. Werkzeug nach einem der Ansprüche 1 bis 5, **dadurch gekennzeichnet, daß** Einrichtung und der Formkörper aus einem Stück gefertigt sind.

7. Werkzeug nach einem der Ansprüche 1 bis 6, **dadurch gekennzeichnet, daß** die Spitze des Vorsprungs (15b) gerundet ist.

8. Werkzeug nach einem der Ansprüche 1 bis 7, **dadurch gekennzeichnet, daß** sich die Einrichtung konzentrisch um die Rotationsachse erstreckt.

9. Werkzeug nach Anspruch 8, **dadurch gekennzeichnet, daß** der Durchmesser der konzentrischen Einrichtung zum Einstellen der Richtungskomponente der Umformkraft auswählbar ist.

10. Werkzeug nach einem der Ansprüche 1 bis 7, **dadurch gekennzeichnet, daß** die Einrichtung für bestimmte Umformkraft-Einleitrichtungen hin zur Rotationsachse oder von dieser weg einstellbar ist.

11. Werkzeug nach einem der Ansprüche 1 bis 10, **dadurch gekennzeichnet, daß** der Umformbegrenzer durch einen konzentrisch um die Rotationsachse (R), sich von der Formfläche erstreckenden Ansatz ausgebildet ist.

## Claims

1. A rotary shaped tool for forming an end-portion (11, 111, 211) of a rigid sleeve (13, 113, 213) of a resilient joint, comprising:
- a forming body with a forming surface through which a rolling force can be applied to the end-portion (11, 111, 211) by rolling;
- a device for directed transmission of the forming force into the end-portion (11, 111, 211) with at least one non-negliable direction component pointing radially inwards with respect to the rotational axis (R) of the tool; and
- a forming limiter limiting radially inwards a forming of the end-portion (11, 111, 211) of the sleeve (13, 113, 213), **characterized in that** the device features:
- an encompassing structure (225) for transmitting the forming force to be transmitted into the desired direction, the encompassing structure (225) being designed to encompass the outside of the end-portion of the sleeve; and
- a v-shaped or wedge-shaped protrusion (15, 15a, 15b) protruding from the forming surface for transmitting the forming force to be transmitted into the desired direction.

2. A tool according to claim 1, **characterized in that** the device is arranged at the forming surface.

3. A tool according to claim 1 or 2, **characterized in that** the device is designed to transmit the forming force in a directed manner into the end-portion with at least one non-negliable direction component pointing to and away from the rotational axis (R).

4. A tool according to any of the claims 1 to 3, **characterized in that** the device is designed as a spreading or splitting structure.

5. A tool according to claim 4, **characterized in that** a spreading angle for adjusting the directional component of the forming force can be selected.

6. A tool according to any of the claims 1 to 5, **characterized in that** device and the forming body are produced from one piece.

7. A tool according to any of the claims 1 to 6, **characterized in that** the tip of the protrusion (15b) is rounded.

8. A tool according to any of the claims 1 to 7, **characterized in that** the device extends concentrically around the rotational axis.

9. A tool according to claim 8, **characterized in that** the diameter of the concentrical device can be selected to adjust the directional component of the forming force.

10. A tool according to any of the claims 1 to 7, **characterized in that** the device can be adjusted for specific forming force transmission directions to or away from the rotational axis.

11. A tool according to any of the claims 1 to 10, **characterized in that** the forming limiter is built by a nose protruding from the forming surface and concentrically around the rotational axis (R).

## Revendications

1. Outil de déformation par rotation pour la déformation d'une zone d'extrémité (11, 111, 211) d'une douille rigide (13, 113, 213) d'une articulation élastique, comprenant :
- un corps de déformation avec une surface de déformation via laquelle il est possible de conférer une force de déformation de façon déroulante à la zone d'extrémité (11, 111, 211),
- un dispositif pour l'introduction orientée de la force de déformation dans la zone d'extrémité (11, 111, 211) avec au moins une composante directionnelle non négligeable dirigée radialement vers l'intérieur par rapport à l'axe de rotation (R) de l'outil, et
- un limiteur de déformation qui limite une déformation de la zone d'extrémité (11, 111, 211) de la douille (13, 113, 213) radialement vers l'intérieur,
**caractérisé en ce que** le dispositif :
- présente une structure d'enveloppement (225) pour guider la force de déformation d'introduction dans la direction souhaitée, laquelle est étudiée pour envelopper le côté extérieur de la zone d'extrémité de la douille ; et
- une saillie (15, 15a, 15b) en forme de coin ou en forme de V s'étendant à partir de la surface de déformation pour guider la force de déformation d'introduction dans la direction souhaitée.

2. Outil selon la revendication 1, **caractérisé en ce que** le dispositif est disposé sur la surface de déformation.

3. Outil selon la revendication 1 ou 2, **caractérisé en ce que** le dispositif est étudié pour introduire de manière orientée la force de déformation dans la zone d'extrémité avec au moins une composante directionnelle non négligeable dirigée vers l'axe de rotation (R) et en éloignement par rapport à l'axe de rotation (R).

4. Outil selon l'une des revendications à 3, **caractérisé en ce que** le dispositif est réalisé en tant que structure d'écartement ou de séparation.

5. Outil selon la revendication 4, **caractérisé en ce qu'**un angle d'écartement peut être sélectionné pour le réglage de la composante directionnelle de la force de déformation.

6. Outil selon l'une des revendications 1 à 5, **caractérisé en ce que** le dispositif et le corps de déformation sont fabriqués d'une seule pièce.

7. Outil selon l'une des revendications 1 à 6, **caractérisé en ce que** la pointe de la saillie (15b) est arrondie.

8. Outil selon l'une des revendications 1 à 7, **caractérisé en ce que** le dispositif s'étend de manière concentrique autour de l'axe de rotation.

9. Outil selon la revendication 8, **caractérisé en ce que** le diamètre du dispositif concentrique pour le réglage de la composante directionnelle de la force de déformation peut être sélectionné.

10. Outil selon l'une des revendications 1 à 7, **caractérisé en ce que** le dispositif peut être réglé pour des dispositifs d'introduction de force de déformation définis vers l'axe de rotation ou en éloignement de celui-ci.

11. Outil selon l'une des revendications 1 à 10, **caractérisé en ce que** le limiteur de déformation est réalisé par un appendice s'étendant concentriquement autour de l'axe de rotation (R) à partir de la surface de déformation.
